# EUROPEAN PATENT SPECIFICATION

(11) **EP 1 725 062 B1**
(45) Date of publication and mention of the grant of the patent: **02.07.2008**
(21) Application number: 06009448.9
(22) Date of filing: 08.05.2006
(51) Int. Cl.: H04Q 7/38, H04Q 7/24

(54) **Method and apparatus for base station controller relocation in wireless communication system**
Verfahren und Vorrichtung zu Neuzuordnung eines Basisstationkontrollers in einem drahtlosen Kommunikationssystem
Procédé et dispositif pour la relocation d'un contrôleur de station de base dans un réseau de communication sans fil.

(30) Priority: 09.05.2005 KR 20050038270
(43) Date of publication of application: 22.11.2006
(73) Proprietor: LG - Nortel Co., Ltd., 679, Yeoksam-dong Gangnam-gu Seoul (KR)
(72) Inventor: Lee, Sang Chul, Gangnam-gu Seoul 135-806 (KR)
(74) Representative: Katérle, Axel

(56) References cited:
- EP-A- 1 509 033
- WO-A-01/20938
- ETSI: "Universal Mobile Telecommunications System (UMTS); Bearer-independent circuit-switched core network; Stage 2 (3GPP TS 23.205 version 4.8.0 Release 4); ETSI TS 123 205" ETSI STANDARDS, EUROPEAN TELECOMMUNICATIONS STANDARDS INSTITUTE, SOPHIA-ANTIPO, FR, [Online] vol. 3-CN4, no. V480, March 2005 (2005-03), pages 1-184, XP014027520 ISSN: 0000-0001 Retrieved from the Internet: URL:www.etsi.org> [retrieved on 2006-10-06]

## Description

The present invention generally relates to wireless communication systems, and more particularly to a relocation/handover of a base station controller in a WCDMA (wideband code division multiple access) system.

The WCDMA radio communication system is one of the 3rd generation wireless communication system developed for multimedia transmission. Such system has several advantages over the conventional systems such as high-quality motion picture service and fast data transmission rate. The WCDMA radio communication system comprises a plurality of mobile stations (MSs), a universal terrestrial radio access network (UTRAN) consisting of a plurality of radio network systems (RNSs) and a core network (CN). Among the above features, the RNS comprises a plurality of Node Bs, which handles two-way data communication with the mobile stations located inside the assigned cell region and a radio network controller (RNC), which controls the Node Bs within the same RNS to thereby dynamically allocate the radio resource. When the MS exits the serving cell region to enter into another cell region, a mobile services switching center (MSC), which is an switching center for the core network (CN), performs the handover or relocation of the serving RNC (SRNC) in order to maintain the call. The SRNC provides mobile service to the MS by rerouting the channel assigned to the MS from the exiting cell to the entering cell. The MSC in the WCMA network is categorized into 3G_MSC_A and 3G_MSC_B, according to its role in the network during the relocation or handover operation.

In the WCDMA system, all the calls are made through channels formed by connecting Iu(Iu', lu") (an interface between the RNS and CN) or A(A', A") (an interface between the BSC and CN) to B(B', B", B"') (an relay interface). To describe the connecting operation for each interface in the SRNS relocation or handover, the existing call is presumed to be in a state where Iu'/A' and B' are connected. When there is an intra 3G MSC relocation/handover (Rel/HO), which only performs Iu relocation/handover between the RNS and the MSC, a new connection between Iu"/A" and B' must be established. On the other hand, when there is an inter 3G MSC relocation/handover (Rel/HO), which includes the relocation of the connection between the MSCs, a new connection between B" and B' must be established. Also, when a subsequent inter 3G MSC relocation/handover occurs while B" and B' are in connection, a new connection between B'" and B' must be established. These procedures and steps are disclosed in 3GPP TS 23.009, as summarized in Table 1 provided below.

**[Table 1]**

| Type | Initial State | Intermediate State | Final State | |
|---|---|---|---|---|
| | | | Success | Fail |
| Intra 3G Rel/HO | B'tolu' | B'to Iu' and Iu" | B'to Iu" | B'to Iu' |
| | B'toIu' | B'to Iu' and A" | B'to A" | B'to Iu' |
| | B'toA' | B'to A' and Iu" | B'to Iu" | B'to A' |
| Inter 3G Rel/HO | B'to Iu' | B'to Iu' and B" | B'to B" | B'to Iu' |
| Subsequent Inter 3G Rel/HO | B' to B" | B' to B"and B"' | B' to B"' | B'to B" |

In the intra 3G MSC relocation/handover, 3G_MSC_A uses a RANAP (Radio Access Network Application Part) or BSSMAP (Base Station System Mobile Application Parts) interface to handle resource management, mobility management and call control during the SRNS relocation/handover. On the contrary, in the inter 3G MSC relocation/handover, 3G_MSC_A and 3G_MSC_B are connected through MAP (Mobile Application Part) and ISUP (ISDN User Part)BICC (Bearer Independent Call Control) interface. Further, mobility management and call control are handled by 3G_MSC_A, whereas resource management is handled by both 3G_MSC)A and 3G_MSC_B. Also, in the subsequent SRNS relocation/handover, 3G_MSC_A additionally performs the role as an anchor MSC.

A conventional MSC employs a 3-way bridging function or a complex switch structure with an extended switching function to support and realize the aforementioned functions. It further supports an intermediate state to reduce the time gap during the relocation/handover. The aforementioned role of 3G_MSC_A for the SRNS relocation/handover in the WCDMA R4 system is distributed into a MSC Server (MSV) and a Media Gateway (MGW). The switching function is performed by the MGW node having the complex switching function that uses context parameters created by a change flow direction procedure. The MSC controls this through H.248/MEGACO. H.248/MEGACO, which is one of the protocols for VoIP, provides a logical connection in the MGW. Such connection is described as an entity or a context, thereby classifying the MGW into terminations and contexts.

The context is a logical connection element of the termination in MGW, thus defining the relationship between the terminations, such as topology or media mixing between terminations, switching parameter, etc., in the context. The context, which is used for connections between a plurality of terminals, contains more than two terminations. Further, a null context used for event detection and connected network support contains one termination. Executing an add instruction (ADD) pointing to a certain context ID to connect the termination to the context connects the termination to the assigned context. Otherwise, the MGW creates a new context and connects it to the termination. On the contrary, a subtract instruction (SUB) is used to remove the termination or terminate the connection and a move instruction (MOVE) is used to move the termination to a different context. The termination is a logical entity that creates and transmits media streams and control streams in the MGW. The termination's characteristic is defined by a descriptor contained in an instruction. The termination has a termination ID assigned by the MGW at its creation. The type of termination can be broadly classified into a permanent termination, which semi-permanently exists in the MWG, and an ephemeral termination that temporarily exists.

Since the aforementioned inter 3G_MSC SRNS relocation/handover procedure using H.248/MEGACO is different from the intra 3G_MSC RNS relocation/handover procedure in terms of signaling aspect but similar in switching control aspect, only the intra 3G_MSC relocation/handover procedure will be described below.

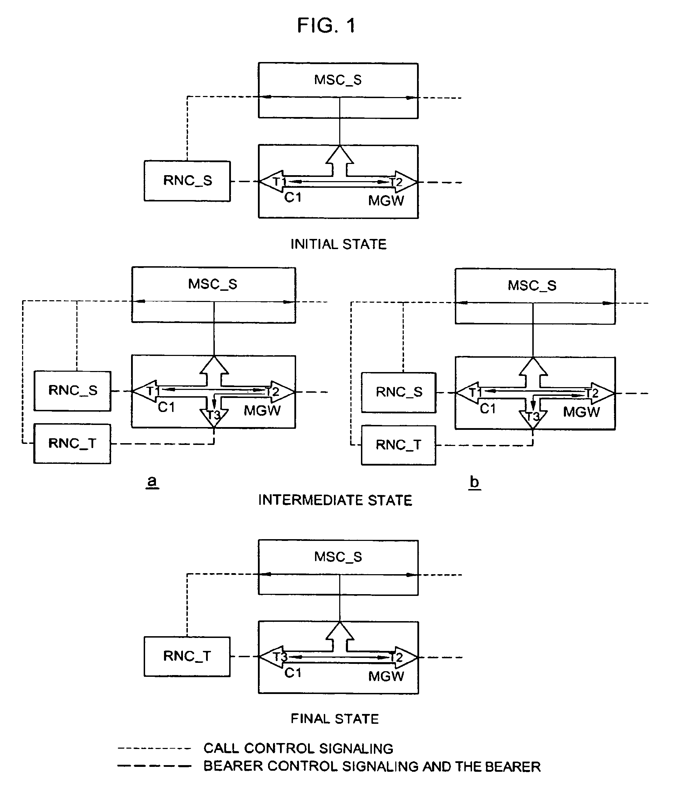

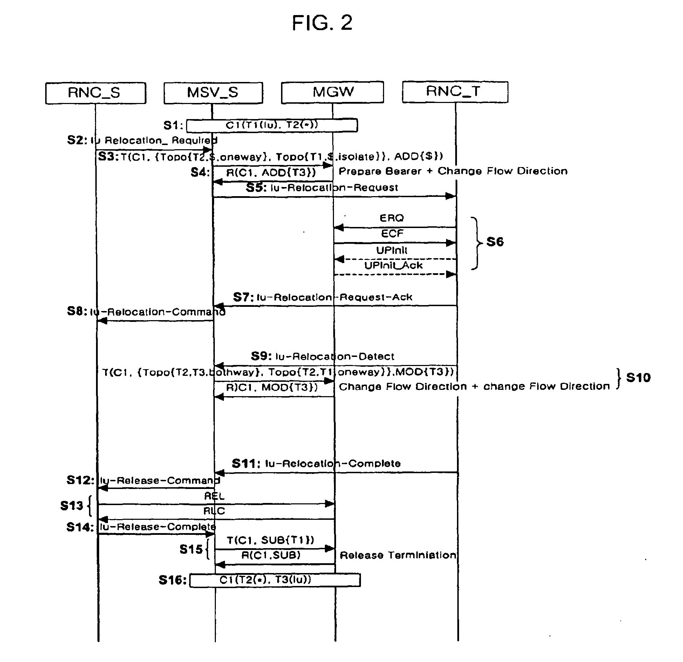

Fig. 1 is a schematic diagram illustrating the operation of a complex switch in the MGW of intra 3G MSC_A disclosed in 3GPP TS 23.305. Fig. 2 is a schematic diagram showing the overall process of the intra 3G MSC_A relocation/handover procedures. First of all, S in RNC_S, MSV_S and MGW_S denotes the source that currently provides the service, while T in RNC_T denotes the target for the relocation/handover. Referring to Fig. 1, as for an established call subjected to the intra MSC SRNS relocation handover procedure in the conventional WCDMA R4 system, termination 1 (T1), which provides access to a RNC_S (RNC source) through Iu in the MGW and termination 2 (T2, which provides access to the other party in the MGW, provide a connection between the RNS (connected to the MS) and CN. The connection is provided through a topology descriptor set by a context 1 (C1), which has context related parameters (bothway, oneway, isolate) (S1).

At this time, when the SRNS relocation/handover becomes necessary, such as a change in the location of the MS, the RNC_S providing service to MS sends a relocation request (Relocation Required) to the MSV_S (S2). The MSV_S, upon receiving the relocation request from RNC_S by step S2, acquires a binding reference and a bearer address from the MGW by a prepare bearer procedure to prepare the radio resource. It then creates a termination 3 (T3) for RNC_T in the MGW. Thereafter, the MGW creates the topology descriptor that initializes the MGW through a change flow direction procedure to set T1 and T2 bothway, as well as T2 and T3 oneway to T3 (S3).

After step S3, the MGW performs switching to set T1 and T2 bothway, T2 and T3 oneway to T3 (shown in Fig. 2) by using the topology descriptor (S4). Upon creating T3 through the aforementioned steps, the MSV_S sends a relocation request signal (Relocation Request) to a target RNC_T by using the information of the established call (S5). Then, the MGW and the target RNC_T sets the radio resource (bearer) for an Iu relocation/handover of SRNS for the MS by using ALCAP (AAL Type2 signaling Protocol-Capability set1) and UP (User Plane) protocol (S6). When the preparation of radio resource for the SRNS relocation/handover in step S6 is complete, the RNC_T sends a relocation request acknowledgement (Relocation Request Ack) to the MSV_S to notify that the radio resource preparation has been successfully completed (S7). Along with step S7, the MSV_S sends a relocation instruction (Relocation Command) to the RNC_S to proceed with the SRNS relocation/handover (Rel/HO) procedure (S8). Next, when the relocation procedure proceeds at RNC_T by step S7, the MSV_S receives a relocation detect message (Relocation Detect) from RNC_T (S9). Then, when the relocation command is sent to the RNC_S in step S8 or selectively, if the relocation detect message is received from the RNC_T in step S9, the MSV_S creates a topology descriptor that defines the topology relationship, wherein T1 of the MGW is set to an isolated state, T2 is set to a oneway state to T1, and T2 and T3 are set to a bothway state, thereby connecting the terminations in the MGW similar to the intermediate state b shown in Fig. 2.

Next, upon completing the relocation by the RNC_T, the RNT_T sends a relocation complete message (Relocation Complete) to MSC_S (S11). Upon receiving the relocation complete message from the RNC_T in step S11, the MSV_S sends a radio resource release command for releasing the bearer assigned to the RNC_S so as to release the resource for the RNC_S (S12). After receiving the radio resource release command (Release Command) from the MSV_S, the RNC_S releases the bearer by using ALCAP (S13). The RNC_S completes the release of the bearer for interface lu through step S 12 and then notifies the completion of the bearer release to the MSV_S through a bearer release complete message (Release Complete) (S 14).
The MSV_S releases the resources of the MGW assigned to the RNC_S by releasing the oneway connection from T2 to T1 and removing T1 through release termination procedures, thereby connecting the terminations as the final state shown in Fig 2. Through step S 15, T2 and T3 in the MGW are connected, thereby completing the SRNS relocation/handover (Rel/HO) (S16).

The aforementioned conventional SRNS relocation/handover method in the WCDMA R4 system only describes the relocation/handover procedures by using the 3-way bridging function or the special switching function implemented by the MGWs having a handover device with the complex switching structure. It does not provide the SRNS relocation/handover procedure using a MGW having a handover device with a simplex switching structure. Therefore, the prior art does not provide a SRNS relocation/handover function using the MGW having the simplex switch structure, which does not have an intermediate state, or, optionally, that does not support the topology descriptor of H.248/MEGACO. Also, not only does the prior art require the MGW with high complexity to realize the topology, but it also requires intricate control of MGW and MSV when the context has more than three terminations, such as the SRNS relocation/handover for the system with value added service.

Therefore, it is the object of the present invention to provide a method for SRNS relocation/handover (Rel/HO) in a WCDMA system through a MGW having a handover device with a simplex switch structure, thereby resolving the aforementioned problems in the conventional SRNS relocation or handover method in the WCDMA R4 system.

Some or all of the above problems are solved by a method of relocation a serving base station controller having the features of claim 1 and an apparatus for relocating a serving base station controller having the features of claim 4.

The present invention provides a method for relocating a serving base station controller by switching terminations each associated with a plurality of base station controllers. The method comprises receiving a relocation request from a source base station controller, creating a termination 3 (T3) for a target base station controller in response to the relocation request and performing simplex switching to the terminations according to the change through connection procedure, thereby connecting the termination 3 (T3) with a termination 2 (T2). This initially maintains the connection with the source base station controller. The target base controller is relocated as a serving base station controller by the above connection.

The step of connecting the second termination comprises initializing the terminations, requesting a base station relocation to the target base station controller, setting the terminations to an intermediate state connected by a stream mode, receiving a relocation complete message from the target base station controller, and removing a termination 1 (T1) for the source base station controller.

The step of requesting the relocation comprises initializing the terminations after receiving the relocation detect message from the target base station controller.

The step of removing the termination 1 (T1) removes the termination 1 (T1) after receiving the relocation complete message from the target base station controller.

The step of requesting the base station controller relocation initializes the terminations to set the termination 3 (T3) to the inactive mode as well as the termination 1 and 2 (T1, T2) to the send and receive mode.

The intermediate state is a state connected by a stream mode where the termination 2 and 3 (T2, T3) are set to the send and receive mode, and where the termination 1 (T1) is set to the inactive mode.

The present invention also provides an apparatus for relocating a serving base station controller by switching terminations each associated with a plurality of base station controllers. The apparatus comprises: a signaling function part for executing a change through connection procedure in response to a base station controller relocation request from a source base station controller; and a switching function part for creating a termination 3 (T3) for the target base station controller. This is to perform simplex switching to the terminations to connect the termination 3 (T3) to the termination 2 (T2), which initially maintains the connection with the source base station controller.
A serving base station controller is relocated to the target base station controller by the connection.

The switching function part initializes the terminations and then requests a base station controller relocation request to the target base station controller. It then sets the terminations to an intermediate mode connected by a stream mode. Upon receiving a relocation complete message from the target base station controller, it removes a termination 1 (T1) for the source base station controller.

The switching function part initializes the terminations to a state connected by a stream mode, where the termination 3 (T3) is set to the inactive mode, and where the terminations 1 and 2 (T1, T2) are set to the send and receive mode.

The intermediate state is a state connected by the stream mode, where the termination 2 and 3 (T2, T3) are set to the send and receive mode, and where the termination 3 (T1) is set to the inactive mode.

The above and other object and features in accordance with the present invention will become apparent from the following descriptions of preferred embodiments given in conjunction with the accompanying drawings, in which:

Fig. 1 is a schematic diagram showing a switching operation of a complex switch using a topology descriptor in a conventional intra MSC SRNS relocation procedure disclosed in 3GPP TS 23.205.

Fig. 2 is a flow chart showing a conventional intra MSC RNS relocation procedure.

Fig. 3 is a block diagram of a switching center (MSC) for a SRNS relocation/handover in a WCDMA system in accordance with a preferred embodiment of the present invention.

Fig 4 is a diagram showing a switching process of a simplex switch using stream mode method in accordance with a preferred embodiment of the present invention.

Fig 5 is a flow chart showing a WCDMA SRNS relocation/handover process in accordance with a preferred embodiment of the present invention.

Hereinafter, the preferred embodiments of the present invention will be described in detail with reference to the accompanying drawings.

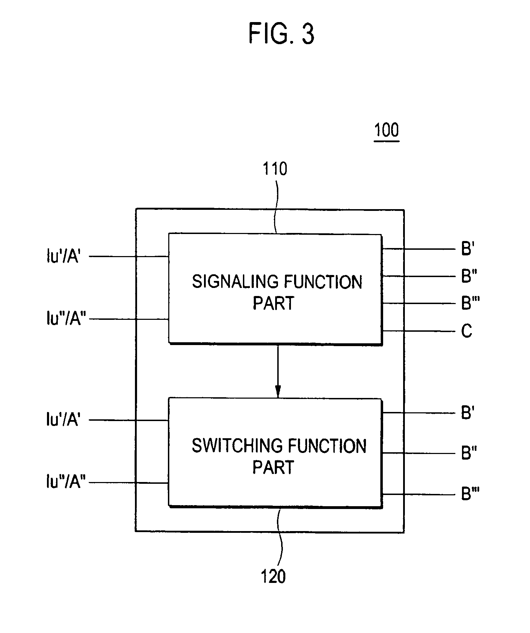

Fig. 3 is a block diagram of a switching center for a SRNS relocation/handover in a WCDMA system in accordance with a preferred embodiment of the present invention. Referring to Fig. 3, the switching center (3G_MSC_A)(100), which performs the serving radio network controller (SRNC) relocation/handover in the WCDMA system, comprises: a signaling function part (110) to handle the signaling for protocol execution using various interfaces (RANAP, BSSMAP, MAP (Mobile Application Part), ISUP/BICC); and a switching function part (120) to perform radio bearer management according to the signaling part (110)'s control and to create terminations for each radio network controller (RNC) to set up connections.

Switching function part (120) has a simplex switch structure and sets the connection between the terminations through simplex switching. Herein, the simplex switching refers to switching the termination states in a context such that there is always at least one termination set to inactive. Among the interfaces connected to the switching function part (120), Iu' is a voice/data interface to a source radio network controller (RNC_S), which currently provides a service to a mobile station (MS). Further, Iu" is a voice/data interface to target radio network controller (RNC_T), which will provide a service to the MS upon completion of the relocation operation. When a BSC provides mobile communication service (instead of the RNC), a voice/data interface to the source BSC (BSC_S), which currently provides the service, is represented as A'. Further, a voice/data interface to target BSC (BSC_T), which will provide the service after the completion of the relocation operation, is represented as A". Among the interfaces connected to the switching function part (120), B' is a voice/data relay interface to a MSC, which currently has a call set up to the MS. B" is a voice/data relay interface to the switching center, which handles RNC_T, namely, MSC-B. B"' is a voice/data relay interface to the switching center, which handles the target RNC in subsequent relocation/handover, namely, MSC-B".

By setting the connection between the terminations through simplex switching, the switching function part (120), media gateway (MGW) for example, which does not support a topology descriptor (an optional parameter of H.248/MEGACO) or a complex switch structure can be used to provide the SRNS relocation/handover. Also, the complexity of the switching function part (120) is not increased to implement the topology. Further, the complexity of the control of switching function part (120) for relocation/handover does not increase even when more than three terminations are in a context. When the relocation/handover is required for reasons such as location displacement of the MS, a termination 3 for the target RNC (RNC_T) is created in the switching function part (120) according to the relocation/handover request from the source RNC (RNC_S), which provides a service to the MS.

Signaling function part (110) initializes the switching function part (120) byusing a change through connection procedure. It then requests the relocation/handover to the RNC_T. Advantageously, through the initialization, the switching function part (120) comes into a state where the terminations are connected in a stream mode, in which the termination for RNC_S (T1) is in the send and receive mode (SendRcv), the termination for the other party initially maintaining connection with the RNC_S (T2) is in the send and receive mode (SendRcv) and the termination for RNC_T is in the inactive mode (Inactive). Said change in the stream mode is performed by a change through connection procedure, which changes the characteristics of the termination.

The stream mode is a parameter that defines the characteristic of each termination (T1, T2, T3) in the change through connection procedure. The stream mode, which defines the characteristic of the terminations, has a send and receive mode, send only mode, receive only mode and inactive mode, by which the terminations form the stream connection. Since switching is performed by using the stream mode, only the stream mode of each termination needs to be considered, thereby relatively easing the management of the SRNS relocation/handover.

The signaling function part (110), after sending the relocation command to the RNC_S or receiving the relocation detect message from the RNC_T upon completing the radio resource allocation between the switching function part (120) and the RNC_T, sets each termination of switching function part (120) to an intermediate state connected by stream mode by using the change through connection procedure. Advantageously, the intermediate state means the state connected by the stream mode where the termination for the RNC_S is in the inactive mode, the termination for the other party initially maintaining connection with the RNC_S is in the send and receive mode, and the termination for the RNC_T is in the send and receive mode. Signaling function part (110) receives a relocation complete message, releases the Iu for the RNC_S and controls the switching function part (120) to remove the termination for the RNC_S in the switching function part (120). By doing so, the serving RNC, which provides the service to the MS, becomes relocated from the RNC_S to the RNC_T.

Among the interfaces connected to the signaling function part(110), Iu' is a signaling interface to source RNC(RNC_S) that currently provides service to MS. Further, Iu" is a signaling interface to the target RNC(RNC_T) that will provide service to MS upon completing the relocation operation. When a BSC provides service to the MS (instead of the RNC), the signaling interface to the source BSC, which currently provides a service to MS, is denoted as A'. Further, the signaling interface to the target BSC (BSC_T_), which will provide a service to the MS upon completing the relocation operation, is denoted as A". Among the interfaces connected to the signaling function part (110), B' is a signaling relay interface to MSC that currently has a call set up to the MS. B" is a signaling relay interface to a switching center that handles the RNC_T, namely, MSC-B. B"' is a signaling relay interface to the switching center that handles the target RNC in subsequent relocation/handover, namely, MSC-B'. C is an interface that connects to the MSC-B and MAP message is exchanged through this interface.

Under the 3GPP separated type R4 standard, the role of switching center (100) or 3G MSC_A for the SRNS relocation/handover in the WCDMA R4 system is divided into a MSC server(MSV) (corresponds to signaling function part (110)) and a media gateway(MGW) (corresponds to switching function part (120)). The MSV controls the MGW using H.248/MEGACO.

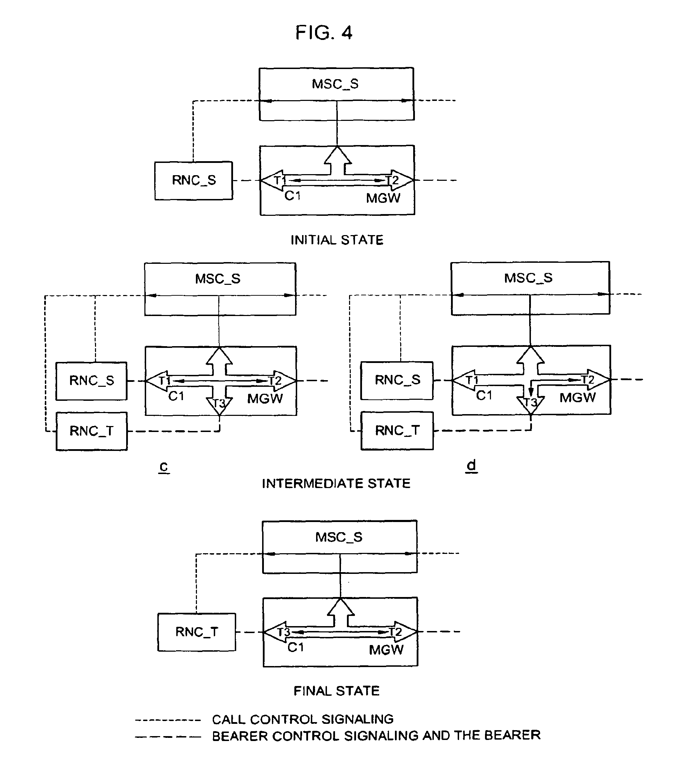

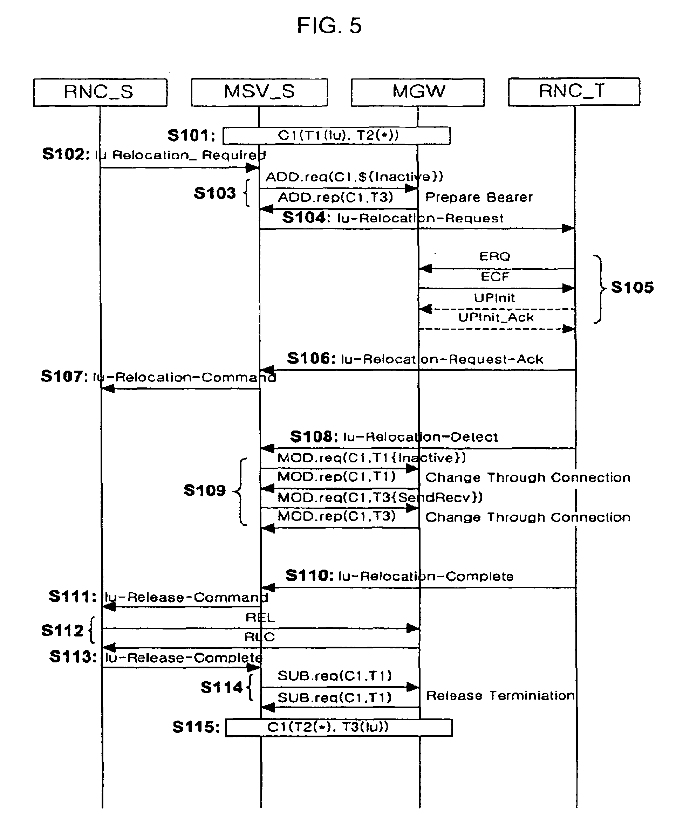

Fig. 4 is a schematic diagram showing the stream connection relationship between terminations in a MGW having a simplex switch structure for a SRNS relocation/handover in a WCDMA R4 system. Further, Fig. 5 is a diagram showing the process of the SRNS relocation/handover procedures in the WCDMA R4 system using a change through connection procedure. In Figs. 4 and 5, MSV corresponds to signaling function part (110) in Fig. 3, while MGW corresponds to switching function part (120) in Fig. 3. Also, 3G_MSC_A corresponds to switching center (100) in Fig. 1.

Hereinafter, referring now to Figs. 4 and 5, an intra MSC SRNS relocation/handover procedure by 3G MSC_A having MGW with simplex switch structure according to one embodiment of the present invention is explained in detail. Also, as to the detailed description of the above embodiment of the present invention, an inter MSC SRNS relocation or handover procedure is different from an intra MSC relocation/handover procedure in terms of signaling control aspect. However, they are similar in terms of switching control aspect. Therefore, only the intra MSC SRNS relocation/handover procedure is explained herein as a representative.

Each termination in the MGW of the 3G_MSC_A having the simplex switch structure forms stream connection by the stream mode defining the characteristics of each termination (T1, T2, T3). The change in stream mode is performed through the change by the connection procedure, which changes the characteristic of the termination. The stream mode, which defines the characteristic of the termination, has the send and receive mode, send only mode, receive only mode and inactive mode. Further, the terminations form stream connection according to this termination characteristic. As shown in Fig. 4, the intra MSC SRNS relocation/handover procedure in the 3G MSC_A possessing the MGW with the simplex switch structure is defined in that one of the terminations providing the connection to the RNC_S and the RNC_T is always in the inactive mode. That is, as shown in Fig. 4, the present invention is defined in that, instead of setting the connection between the terminals of the RNC and the MGW by creating the topology descriptor with context related parameters in the MGW having a complex switch structure, the terminations are connected by the stream mode defining the termination characteristic through the simplex switch structure.

In the intra MSC SRNS relocation/handover procedure, the existing call, which is subject to the relocation/handover, provides the connection between the RNS connected with the MS and CN through context 1 (C1). Context 1 forms the stream connection where the termination 1 (T1) (provides connection to the RNC_S in the MGW) and the termination 2 (T2) (provides connection to the other party in the MGW) are both set to the send and receive mode. At this time, when the relocation/handover is required due to certain events (e.g., location movement of the MS), a relocation request signal (Relocation Required) is sent to the RNC_S, which provides a service to the MS (S102). MSV_S, upon receiving the relocation request signal from the RNC_S by step S 102, acquires a binding reference and a bearer address from the MGW using a prepare bearer procedure to prepare the radio resource, thereby creating a new termination 3 (T3) in the MGW. Next, the MSV_S performs the initialization of the MGW to set the stream mode for T3 to inactive and maintains the existing stream connection between T1 and T2 by using the change through connection procedure, as shown in the intermediate state c (S103).

After acquiring new T3 in step S103, the MSV_S sends a relocation request message (Relocation Request) to a target radio network controller (RNC_T), the subject of the relocation/handover, using the connected call information (S104). After step S104, the RNC_T and the MGW sets the radio resource (bearer) by interchanging ERQ (Establish Request), ECF (Establish Confirm), UPinit and UPinit_Ack by using ALCAP (AAL Type2 signaling Protocol-Capability set1) and UP (User Plane) protocol (S105). When the radio resource (bearer) is set, the RNC_T sends a relocation request acknowledge message (Relocation Request Ack) to the MSV_S so as to notify that the radio resource (bearer) has been successfully set (S106). The MSV_S, upon receiving the relocation request acknowledge message in step S106, sends a relocation command (Relocation Command) to proceed with the relocation/handover procedure (S107). After step S107, the MSV_S receives a relocation detect signal (Relocation Detect) notifying the reception of the relocation command from the target RNC (RNC_T) (S108). At this time, by using the change through connection procedure, the MSV_S sends MOD.req (C1, T1 {inactive}) to inactivate T1, where the MGW notifies inactivation of T1 to the MSV_S by sending MOD.rep (C1, T1), where the MSV_S sends MOD.req(C1, T3 {SendRecv}) to the MGW to set T3 to the send and receive mode, and where the MGW sends MOD.rep(Cl, T3) to the MSV_S to notify that T3 has been set to the send and receive mode. This sets the stream connection between T1, T2 and T3, as shown in the intermediate state d of Fig. 4. At this time, it is defined in that, of the three terminations in the C1 at the intermediate state, initially T3 is in the inactive state and T1 later becomes inactive. Thus, only two of the three terminations maintain the connection at any given state (S109). After step S109, the MSV_S receives a relocation complete message (Relocation Complete) from the RNC_T (S110). The MSV_S, upon receiving the relocation complete message from the RNC_T, sends an Iu release command (Iu Release Command) to the RNC_S to release Iu resource for RNC_S (S111). The RNC_S, upon receiving the Iu release command in step S111, releases the radio resource (bearer) for MSV_S by using the radio bearer release procedure using ALCAP (S 112). Upon completing the radio resource (bearer) release for Iu between the RNC_S and the MSV_S, the RNC_S notifies the MSV_S of Iu release completion by sending a radio resource release complete message (Release Complete) (S113). Upon receiving the radio resource (bearer) release complete message from the RNC_S, the MSV_S releases the resource in the MGW for T1 set for the connection to RNC_S by using release termination procedure. The above-mentioned release termination procedure is a procedure where the MSV_S sends SUB.req (C1, T1) to the MGW to request the release of resource for T1, where the MGW releases the resource for T1 upon receiving SUB.req (C1, T1) and then sends SUB.rep (C1, T1) to MSV_S to notify that the resource for T1 has been released (S114). By the MGW of the simplex switch structure following the aforementioned step S101 to S 114, T2 and T3 become connected. The intra MSC SRNS relocation/handover procedure is completed (S115).

While the present invention has been shown and described with respect to a preferred embodiments, those skilled in the art will recognize that various changes and modifications may be made without departing from the scope of the invention as defined in the appended claims.

## Claims

1. A method of relocating a serving base station controller by switching terminations each associated with a plurality of base station controllers, the method comprising the steps of:
receiving a relocation request from a source base station controller;
creating a third termination, hereinafter referred to as T3, for a target base station controller in response to the relocation request; and
performing simplex switching to the terminations according to a change through connection procedure, such that T3 is connected with a second termination, hereinafter referred to as T2, initially maintaining a connection with the source base station controller, and a first termination, hereinafter referred to as T1, for the source base station controller is removed,
wherein the target base controller is relocated as a serving base station controller by the above connection, and
wherein the step of performing the simplex switching includes:
initializing the terminations to set T3 to an inactive mode, and T1 and T2 to a send and receive mode by a first stream mode;
requesting a base station relocation to the target base station controller;
setting the terminations to an intermediate state, wherein the T2 and T3 are set to the send and receive mode and the T1 is set to the inactive mode by a second stream mode at the intermediate state;
receiving a relocation complete message from the target base station controller; and
removing the termination T1.

2. The method of Claim 1, wherein the step of requesting the base station relocation includes initializing the terminations after receiving a relocation detect message from the target base station controller.

3. The method of Claim 1, wherein the step of removing the termination T1 includes removing the termination T1 after receiving a relocation complete message from the target base station controller.

4. An apparatus for relocating a serving base station controller by switching terminations each associated with a plurality of base station controllers, the apparatus comprising:
a signaling function part for executing a change through a connection procedure in response to a base station controller relocation request from a source base station controller; and
a switching function part for creating a third termination, hereinafter referred to as T3, for the target base station controller, performing simplex switching to the terminations to connect T3 to a second termination, hereinafter referred to as T2, initially maintaining a connection with the source base station controller and to remove a first termination, hereinafter referred to as T1, for the source base station controller,
wherein a serving base station controller is relocated to the target base station controller by the connection, and
wherein the switching function part:
initializes the terminations to set T3 to an inactive mode, and T1 and T2 to a send and receive mode by a first stream mode;
requests a base station controller relocation request to the target base station controller;
sets the terminations to an intermediate state, wherein T2 and T3 are set to the send and receive mode and T1 is set to the inactive mode by a second stream mode at the intermediate state; and
removes the termination T1 upon receiving a relocation complete message from the target base station controller.

## Patentansprüche

1. Verfahren zum Wechseln eines versorgenden Basisstationscontrollers durch Umschalten von Terminationen, von denen jede einer Mehrzahl von Basisstationscontrollern zugeordnet ist, wobei das Verfahren die Schritte umfasst:
- Empfangen einer Wechselanforderung von einem Ausgangs-Basisstationscontroller,
- Erzeugen einer nachfolgend als T3 bezeichneten dritten Termination für einen Ziel-Basisstationscontroller in Antwort auf die Wechselanforderung und
- Simplex-Schalten der Terminationen gemäß einer Change-Through-Connection-Prozedur, derart, dass T3 mit einer nachfolgend als T2 bezeichneten, anfänglich eine Verbindung mit dem Ausgangs-Basisstationscontroller haltenden zweiten Termination verbunden wird und eine nachfolgend als T1 bezeichnete erste Termination für den Ausgangs-Basisstationscontroller entfernt wird,
wobei durch die obige Verbindung der Ziel-Basisstationscontroller zum versorgenden Basisstationscontroller wird und
wobei der Schritt des Simplex-Schaltens umfasst:
- Initialisieren der Terminationen, um mittels eines ersten Strommodus T3 in einen inaktiven Modus zu setzen und T1 und T2 in einen Sende- und Empfangsmodus zu setzen,
- Anfordern eines Basisstationswechsels bei dem Ziel-Basisstationscontroller,
- Setzen der Terminationen in einen Zwischenzustand, wobei in dem Zwischenzustand mittels eines zweiten Strommodus T2 und T3 in den Sende- und Empfangsmodus gesetzt werden und T1 in den inaktiven Modus gesetzt wird,
- Empfangen einer Wechselabschlussnachricht von dem Ziel-Basisstationscontroller und
- Entfernen der Termination T1.

2. Verfahren nach Anspruch 1, bei dem der Schritt der Anforderung des Basisstationswechsels das Initialisieren der Terminationen umfasst, nachdem vom Ziel-Basisstationscontroller eine Wechselerkennungsnachricht empfangen wurde.

3. Verfahren nach Anspruch 1, bei dem der Schritt der Entfernung der Termination T1 das Entfernen der Termination T1 umfasst, nachdem vom Ziel-Basisstationscontroller eine Wechselabschlussnachricht empfangen wurde.

4. Vorrichtung zum Wechseln eines versorgenden Basisstationscontrollers durch Umschalten von Terminationen, von denen jede einer Mehrzahl von Basisstationscontrollern zugeordnet ist, wobei die Vorrichtung aufweist:
- einen Signalisierungsfunktionsteil zum Ausführen einer Change-Through-Connection-Prozedur in Antwort auf eine Basisstationscontroller-Wechselanforderung von einem Ausgangs-Basisstationscontroller und
- einen Schaltfunktionsteil zum Erzeugen einer nachfolgend als T3 bezeichneten dritten Termination für den Ziel-Basisstationscontroller und zum Simplex-Schalten der Terminationen, um T3 mit einer nachfolgend als T2 bezeichneten, anfänglich eine Verbindung mit dem Ausgangs-Basisstationscontroller haltenden zweiten Termination zu verbinden und eine nachfolgend als T1 bezeichnete erste Termination für den Ausgangs-Basisstationscontroller zu entfernen,
wobei durch die Verbindung der Ziel-Basisstationscontroller zum versorgenden Basisstationscontroller wird und
wobei der Schaltfunktionsteil
- die Terminationen initialisiert, um mittels eines ersten Strommodus T3 in einen inaktiven Modus zu setzen und T1 und T2 in einen Sende- und Empfangsmodus zu setzen,
- eine Basisstationswechselanforderung an den Ziel-Basisstationscontroller richtet,
- die Terminationen in einen Zwischenzustand setzt, wobei in dem Zwischenzustand mittels eines zweiten Strommodus T2 und T3 in den Sende- und Empfangsmodus gesetzt werden und T1 in den inaktiven Modus gesetzt wird, und
- die Termination T1 auf den Empfang einer Wechselabschlussnachricht von dem Ziel-Basisstationscontroller hin entfernt.

## Revendications

1. Procédé de relocalisation d'un contrôleur de station de base de desserte en commutant des terminaisons chacune associée avec une pluralité de contrôleurs de stations de base, le procédé comprenant les étapes de :
recevoir une demande de relocalisation provenant d'un contrôleur de station de base source ;
créer une troisième terminaison, ci-après appelée T3, pour un contrôleur de station de base cible en réponse à la demande de relocalisation ; et
exécuter une commutation en simplex vers les terminaisons conformément à un changement par l'intermédiaire d'une procédure de connexion, de sorte que T3 est connectée avec une deuxième terminaison, ci-après appelée T2, initialement en maintenant une connexion avec le contrôleur de station de base source, et une première terminaison, ci-après appelée T1, pour le contrôleur de station de base source est supprimée,
dans lequel le contrôleur de station de base cible est relocalisé comme un contrôleur de station de base de desserte par la connexion ci-dessus, et
dans lequel l'étape d'exécution de la commutation en simplex inclut :
d'initialiser les terminaisons pour mettre T3 en un mode inactif, et T2 et T1 en un mode d'émission et de réception par un premier mode flux ;
de demander une relocalisation de station de base sur le contrôleur de station de base cible ;
de mettre les terminaisons en un état intermédiaire, dans lequel T2 et T3 sont mises dans le mode d'émission et de réception et T1 est mise dans le mode inactif par un deuxième mode flux à l'état intermédiaire ;
de recevoir un message de relocalisation terminée du contrôleur de station de base cible ; et
de supprimer la terminaison T1.

2. Procédé selon la revendication 1, dans lequel l'étape de demande de relocalisation de station de base inclut d'initialiser les terminaisons après réception d'un message de relocalisation détectée du contrôleur de station de base cible.

3. Procédé selon la revendication 1, dans lequel l'étape de suppression de la terminaison T1 inclut de supprimer la terminaison T1 après réception d'un message de relocalisation terminée du contrôleur de station de base cible.

4. Appareil pour relocaliser un contrôleur de station de base de desserte en commutant des terminaisons chacune associée avec une pluralité de contrôleurs de stations de base, l'appareil comprenant :
une partie de fonction de signalisation pour exécuter un changement par l'intermédiaire d'une procédure de connexion en réponse à une demande de relocalisation de contrôleur de station de base provenant d'un contrôleur de station de base source ; et
une partie de fonction de commutation pour créer une troisième terminaison, ci-après appelée T3, pour le contrôleur de station de base cible, exécuter une commutation en simplex vers les terminaisons pour connecter T3 à une deuxième terminaison, ci-après appelée T2, initialement en maintenant une connexion avec le contrôleur de station de base source et pour supprimer une première terminaison, ci-après appelée T1, pour le contrôleur de station de base source,
dans lequel un contrôleur de station de base de desserte est relocalisé sur le contrôleur de station de base cible par la connexion, et
dans lequel la partie de fonction de commutation :
initialise les terminaisons pour mettre T3 en un mode inactif, et T2 et T1 en un mode d'émission et de réception par un premier mode flux ;
demande une relocalisation de station de base sur le contrôleur de station de base cible ;
met les terminaisons en un état intermédiaire, dans lequel T2 et T3 sont mises dans le mode d'émission et de réception et T1 est mise dans le mode inactif par un deuxième mode flux à l'état intermédiaire ; et
supprime la terminaison T1 à réception d'un message de relocalisation terminée du contrôleur de station de base cible.
